Europäisches Patentamt

European Patent Office

Office européen des brevets

(19)

(11) Veröffentlichungsnummer: **0 125 235**
**B1**

(12) # EUROPÄISCHE PATENTSCHRIFT

(45) Veröffentlichungstag der Patentschrift:
**29.04.87**

(51) Int. Cl.⁴: **C 02 F 3/12,** C 02 F 3/20

(21) Anmeldenummer: **84890079.1**

(22) Anmeldetag: **07.05.84**

(54) **Verfahren und Einrichtung zur biologischen Reinigung von Abwässern.**

(30) Priorität: **05.05.83 AT 1651/83**

(43) Veröffentlichungstag der Anmeldung:
**14.11.84 Patentblatt 84/46**

(45) Bekanntmachung des Hinweises auf die Patenterteilung:
**29.04.87 Patentblatt 87/18**

(84) Benannte Vertragsstaaten:
**CH DE FR IT LI**

(56) Entgegenhaltungen:
**DE-A-1 584 962**
**DE-A-2 447 501**
**DE-A-2 654 431**
**DE-B-2 751 470**
**FR-A-1 324 049**
**FR-A-1 497 021**

(73) Patentinhaber: **WAAGNER- BIRO AKTIENGESELLSCHAFT, Stadlauer- Strasse 54, A-1221 Wien (AT)**

(72) Erfinder: **Hell, Walter, Dipl.- Ing., Karlsgasse 11b, A-2391 Kaltenleutgeben (AT)**
Erfinder: **Hillinger, Bruno, Dr. Dipl.- Ing., Dreisteingasse 20, A-2371 Hinterbrühl (AT)**

(74) Vertreter: **Wallner, Gerhard, Dipl.- Ing., Waagner- Biro Aktiengesellschaft Patentreferat Postfach 11, A-1221 Wien (AT)**

EP 0 125 235 B1

## Beschreibung

Die Erfindung betrifft ein Verfahren zur biologischen und gegebenenfalls chemischen Reinigung von Abwässern unter Luftzufuhr mit in einem Becken konzentrisch zum Nachklärbecken angeordnetem Belebungsbecken, bei dem der Schlamm aus dem Nachklärbecken zentral gesammelt und mittels einer Pumpe einer Belüftungs- und Trenneinrichtung zugeführt wird, in welcher der Schlamm in Rückführschlamm und abzuführenden Überschußschlamm getrennt wird und bei dem Abwasser aus dem Belebungsbecken umgewälzt und mit dem belüfteten Schlamm aus dem Nachklärbecken durchmischt wird sowie das Abwasser Schlamm-Gemisch nach einer Verweilzeit im Belebungsbecken über eine Überlaufleitung in einen zentralen Sinkkanal des Nachklärbeckens eingeleitet wird, sowie eine Vorrichtung zur Durchführung des Verfahrens.

Es ist bekannt, biologische Abwasseranlagen mehrstufig mit mindestens einer Belebungs- und mindestens einer Nachklärstufe auszugestalten. Diese Anlagen haben den Nachteil, daß sie einen großen Flächenbedarf aufweisen. Bei Flockulationsanlagen sind platzsparende Kläranlagen etwa gemäß der FR-A 1,081.214 bekannt, bei der in einem zentralen Becken die Durchmischung mit dem Flockungsmittel und im umgebenden Ringbecken die Nachklärung erfolgt. Es ist ferner aus der CH-A 462.733 eine zweistufige Kläranage in Turmbauweise bekannt, bei der durch Absetzung eine Klärung des Abwassers erreicht wird.

Aus der DE-A 1,584.962 ist es bekannt, daß Abwasser in ein ringförmiges Belüftungsbecken eingeleitet wird und danach durch ein Rohr in ein zum Belüftungsbecken konzentrisch angeordnetes Nachklärbecken strömt. Abgesetzter Schlamm wird zentral im Nachklärbecken gesammelt und mittels einer Luftbeimischungspumpe nach oben gefördert und dabei belüftet und entweder vollkommen oder teilweise in das Belüftungsbecken zurückgeführt.

Aus der DE-A 2,654.531 ist ein biologisches Abwasserreinigungsverfahren bekannt, bei dem das Abwasser erst in einem Belüftungsbecken und nachher in einem Nachklärbecken behandelt wird. Der Schlamm aus dem Nachklärbecken wird zunächst belüftet und kann anschließend mit dem Abwasser in einer Sonderkammer des Belüftungsbeckens gemischt und weiter belüftet werden.

Aus der FR-A 1,324.045 ist es bekannt, den abgesetzten Schlamm eines Beckens mittels einer Pumpe abzusaugen und in einem Hydrozyklon in einen Ober- und Unterlauf zu trennen sowie den Oberlauf in einen Schlammeindicker zu leiten, wobei Fremdkörper im Unterlauf abgeschieden werden.

Die Erfindung hat es sich zur Aufgabe gestellt, eine kompakte biologische Kläranlage für hochbelastetes Abwasser zu schaffen, die in einem Behälter angeordnet ist, wobei der Behälter sowohl Belebungs- als auch Nachklärbecken beinhaltet und die Belüftung oberhalb des Belebungsbeckens räumlich konzentriert durch Umwälzung des Beckeninhaltes und der einzelnen zu mischenden Komponenten erfolgt, und das Nachklärbecken nach dem System der Aufstromklassierung bzw. nach der Schwebebettfiltration arbeitet. Um im Nachklärbecken günstige Klärbedingungen zu schaffen, ist die Flüssigkeit vor ihrem Eintritt in das Nachklärbecken zu entgasen bzw. durch mehrmaliges Belüften zu spülen, so daß der wirksame Sauerstoffgehalt für die Durchlaufzeit durch das Belebungsbecken erhalten bleibt.

Die Erfindung ermöglicht den Mikroorganismen durch die Trennung der Atmungsperiode von der Fressperiode, insbesondere bei der Regeneration, günstige Lebensbedingungen, so daß die Abwasserreinigung bei kleinstem spezifischem Volumen erfolgt.

Das erfindungsgemäße Verfahren ist dadurch gekennzeichnet, daß in einem ersten Teil des Belebungsbeckens die Belüftung des umgewälzten Abwassers und die Durchmischung mit dem belüfteten Rücklaufschlamm sowie am Übergang vom ersten in den zweiten Teil des Belebungsbeckens eine nochmalige Belüftung erfolgt und daß im zweiten Teil des Belebungsbeckens die Entgasung durchgeführt wird.

Die erfindungsgemäße Vorrichtung zur Durchführung des Verfahrens ist dadurch gekennzeichnet, daß im Unterlauf ein Regelventil vorgesehen ist, und der Unter- oder Überlauf über einen Belüfter in einen Mischbehälter des zweiteiligen Belebungsbeckens mündet. Weitere Erfindungsmerkmale sind in den Unteransprüchen 4 und 5 angeführt.

Die Erfindung ist in den angeschlossenen Fig. 1 bis 5 beispielsweise und schematisch dargestellt. Fig. 1 und 2 zeigen im Aufriß und Schnitt ein erfindungsgemäßes Abwasserbecken, die Fig. 3 und 4 zeigen in ähnlicher Darstellungsweise eine Konstruktionsvariante hiezu.

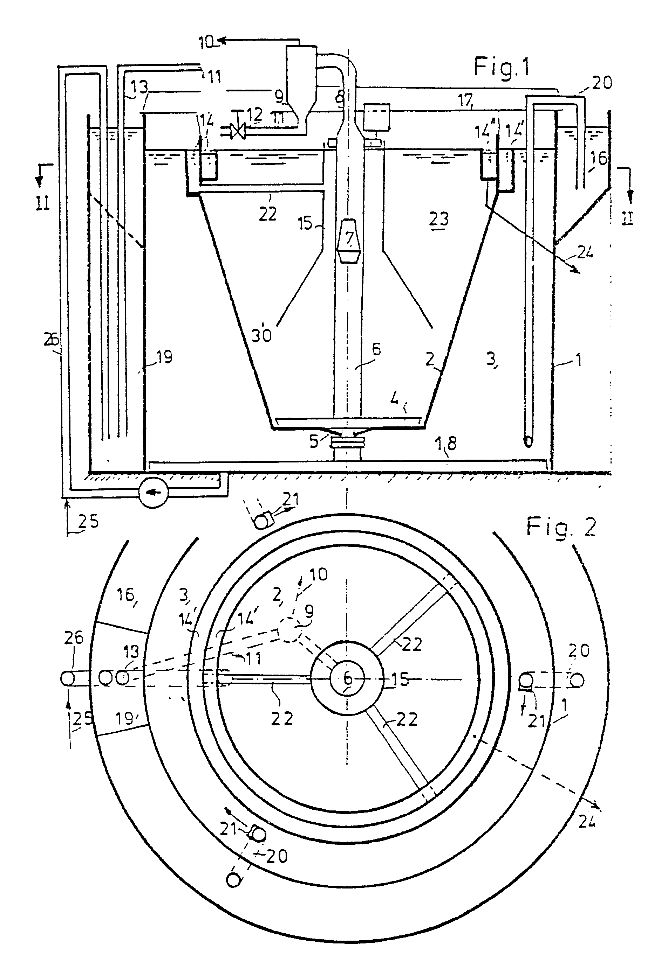

In Fig. 1 ist ein zylindrisches Becken 1 dargestellt, in dem konzentrisch ein kegelstumpfförmiger Einsatz 2 trichterförmig angeordnet ist, wobei die größere Grundfläche im Bereich des Flüssigkeitsspiegels vorgesehen ist. Die kleinere Grundfläche ist am bzw. knapp über dem Boden des Beckens 1 angeordnet. Der Einsatz 2 ist an einer Brücke 17 hängend oberhalb des Bodens des Beckens 1 angeordnet. Das Becken weist einen Grundschlammräumer 18 auf, der mit dem Antrieb des Grundschlammräumers 4 des Nachklärbeckens koppelbar ist.

Die Anordnung über dem Boden ermöglicht die einfache Einfügung eines Grundschlammräumers 18 am Boden des Belegungsbeckens 3, das einen Ringraum aufweist, wobei der Antrieb für den Grundschlammräumer durch das Nachklärbecken 23, welches vom kegelstumpfförmigen Einsatz 2 begrenzt ist, geführt ist. Das Nachklärbecken 23 weist einen Grundschlammräumer 4 auf, der den abgesetzten Schlamm in eine zentrale Schlammgrube 5 befördert, aus welcher er über ein zentrales Ansaugrohr 6 durch eine Schlammpumpe 7 angesaugt und über den Flüssigkeitsspiegel des Nachklärbeckens gehoben wird. In einer Trenneinrichtung 9, die in der Druckleitung 8 nach der Schlammpumpe 7 angeordnet ist, wird die Schlammmenge in zwei Teilströme getrennt, die als Überlauf 10 und als Unterlauf 11 eines Fliehkraftabscheiders ausgebildet sind. Zweckmäßig ist der Fliehkraftabscheider als Zyklon ausgebildet, wobei es sich herausgestellt hat, daß die vitaleren Bakterienstämme im Unterlauf 11 zu finden sind, während im Überlauf 10 im allgemeinen die Anzahl der abgestorbenen also inaktiven Schlammbewohner größer ist. Im Unterlauf 11 ist ein Regelventil 12 vorgesehen, über welches die Mengenregelung des durch den Unter- bzw. Überlauf strömenden Schlammes eingeregelt werden kann. Der durch den Überlauf 10 ablaufende Schlamm wird als Überschußschlamm abgeführt. Der durch den Unterlauf 11 strömende Schlamm wird einem Belüfter 13 zugeführt, wo er durch Vorbeiströmen an Belüftungsöffnungen Luftsauerstoff aufnimmt und an Sauerstoff gesättigt bzw. übersättigt wird. Dieser gesättigte Schlamm wird in einen Mischbehälter 19 eingeführt, wo er mit der Flüssigkeit aus dem ringförmigen Belebungsbecken 3, die in einer ähnlichen Einrichtung belüftet wurde, durchmischt wird. Bei bestimmten Abwässern, insbesondere Chemieabwässern, sind die vitaleren Bakterienstämme im Oberlauf 10 zu finden, so daß in diesen Fällen der Oberlauf belüftet und der Unterlauf 11 als Überschußschlamm abgeführt wird. Da Flüssigkeit und Schlamm einen unterschiedlichen Sauerstoffbedarf und auch unterschiedliche Reaktionszeiten aufweisen, läßt sich durch diese Einrichtung eine optimale Begasung erzielen. Die durchmischte Flüssigkeit wird nun einem Ringraum 16 zugeführt, in welchem eine teilweise Entgasung durch Vergrößerung der freien Oberfläche bzw. durch die vorgegebene statistische Aufenthaltsdauer eine Reaktionszeit bestimmt wird, bevor die Flüssigkeit über einen Heber 20 erneut belüftet und dem eigentlichen Belebungsbecken 3 zugeführt wird. Die untere Öffnung des Hebers 20 weist einen seitlichen Arm 21 auf (Fig. 2), so daß die Flüssigkeit im Ringraum des Belebungsbeckens 3 einen Drall erhält, wodurch einerseits die Durchmischung erhöht wird, was die Absetzung des Schlammes nach Möglichkeit verhindert, und andererseits eine größere Verweilzeit bzw. Reaktionszeit erreicht wird. Das Oberflächenwasser des Belebungsbeckens 3 wird über eine Rinne 14′ gesammelt und von dieser über Leitungen 22 einem zentralen Sinkkanal 15 im Nachklärbecken 23 zugeführt, wo die eigentliche Abtrennung von Schlamm und Klarwasser erfolgt. Das Klarwasser wird in der Rinne 14″ gesammelt und über die Klarwasserableitung 24 abgeführt.

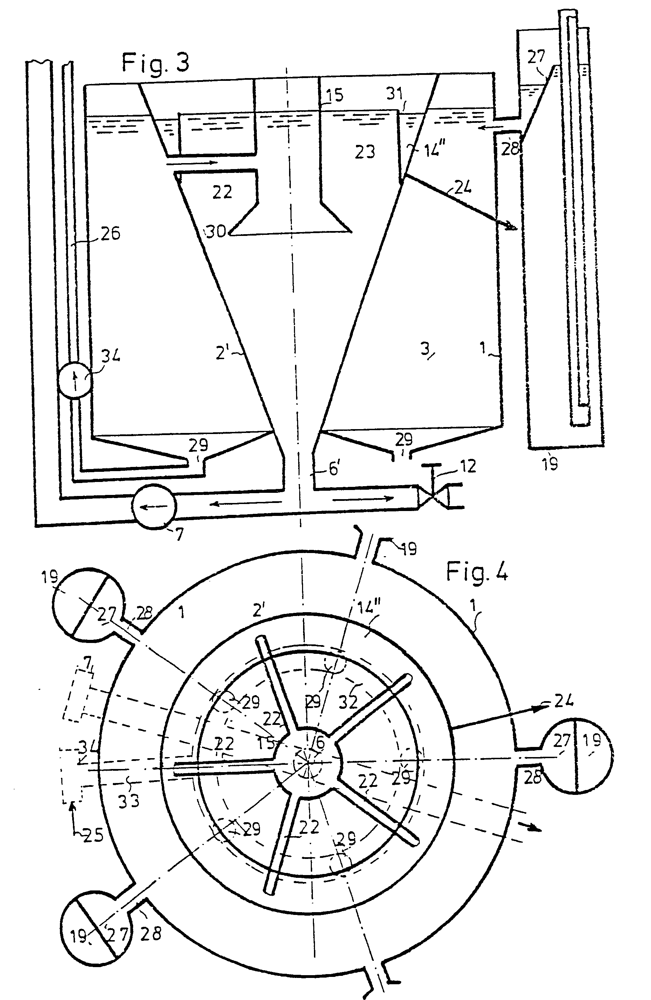

Zweckmäßigerweise sind die Rinnen 14′ und 14″ als Doppelrinne 14 ausgebildet, wobei die mittlere Trennwand über den Flüssigkeitsspiegel hinausgezogen ist. Die Zuführung 25 des frischen Abwassers erfolgt zweckmäßigerweise über die Steigleitung 26 des zu belüftenden Umwälzwassers aus dem Belebungsbecken bzw. erfolgt über eine ähnliche Einrichtung direkt in den Mischbehälter 19, der als gemeinsamer Steigkanal für den belüfteten Schlamm und das belüftete Abwasser ausgebildet ist. In Fig. 2 sind, nur beispielsweise, die Anzahl der Belüftungseinrichtungen bzw. der Rückführleitungen in dreifacher Symmetrie angeordnet. In der Praxis ergibt sich die Anzahl der benötigten parallelen Leitungen aus wirtschaftlichen Überlegungen. So wird beispielsweise in den Fig. 3 und 4 bei einer etwas vereinfachten Konstruktion eine fünffache Symmetrie gewählt. Zum Unterschied zur Fig. 1 zeigt Fig. 3 vom Becken 1 getrennt angeordnete Mischbehälter 19, die eine Überlaufrinne 27 aufweisen, von der die durchmischte Flüssigkeit über radial angeordnete Kanäle 28 oder auch über Heber mit nochmaliger Belüftung in das ringförmige Belebungsbecken 3 überströmt. Der kegelstumpfförmige Einsatz aus Fig. 1 ist durch einen kegelförmigen trichterartigen Einsatz 2′ ersetzt, der so steil ausgebildet ist, daß sich an den Wänden des Einsatzes kein Schlamm ansetzt und der sich absetzende Schlamm über die Spitze des Ansaugrohres 6′ der Schlammpumpe 7 zugeführt wird, wobei das Ansaugrohr 6′ praktisch als zentrale Schlammgrube ausgebildet ist. Auch das Belebungsbecken 3 weist einen kegelförmigen Boden auf, wobei die Öffnungen 29 für die Absaugung der zur Belüftung notwendigen Flüssigkeitsmengen etwa im Bereich der Kegelspitze angeordnet sind. Diese Maßnahme bewirkt die Vermeidung von Grundschlammräumern und damit eine Vereinfachung des apparativen Aufbaues. Gegebenenfalls können die Öffnungen 29 auch in die Ansaugrohre 6′ münden, wodurch eine Pumpe eingespart werden kann. Es ist dann allerdings ein Mengenregel- oder Abschlußorgan vorzusehen. Darüber hinaus ist es nicht unbedingt notwendig, eine Rinne 14′, wie in Fig. 1 gezeigt, vorzusehen, und man kann die Leitung 22 auch direkt vom Belebungsbecken 3 zum Sinkkanal 15 führen, in welchem die praktische Trennung von Schlamm und Flüssigkeit erfolgt, und das Klarwasser über den Ringspalt 30 in den oberen Teil des Nachklärbeckens 23 aufsteigt und über die Trennwand 31 in die Rinne 14″ überströmt, von der die Klarwasserableitung 24 erfolgt. Die Klarwasserableitung 24 kann, wie in den Figuren angedeutet, über eine Leitung durch das Belebungsbecken 3 erfolgen. Ist aber eine Räumung des Belebungsbeckens 3 vorgesehen, so erfolgt die Klarwasserableitung über einen Heber, der mit der Räumerbrücke verbunden das Klarwasser aus der Rinne 14″ in einen nicht dargestellten rinnenförmigen Klarwasserkanal ableitet.

Wie man aus Fig. 4 aus der strichlierten Darstellung erkennen kann, liegen die Öffnungen 29 für das zu belüftende Abwasser des Belebungsbeckens 3 oberhalb des Ringraumes 32, der über einen Kanal 33 mit der Umwälzpumpe 34 verbunden ist, die das Steigrohr bzw. die Steigrohre zu den Belüftungseinrichtungen bedient. Die Erfindung ist nicht auf Rundbecken beschränkt, sie kann auch sinngemäß für Rechteckbecken verwendet werden.

## Patentansprüche

1) Verfahren zur biologischen und gegebenenfalls chemischen Reinigung von Abwässern unter Luftzufuhr mit in einem Becken konzentrisch zum Nachklärbecken angeordnetem Belebungsbecken, bei dem der Schlamm aus dem Nachklärbecken zentral gesammelt und mittels einer Pumpe einer Belüftungs- und Trenneinrichtung zugeführt wird, in welcher der Schlamm in Rückführschlamm und abzuführenden Überschußschlamm getrennt wird und bei dem Abwasser aus dem Belebungsbecken umgewälzt und mit dem belüfteten Schlamm aus dem Nachklärbecken durchmischt wird sowie das Abwasser-Schlamm-Gemisch nach einer Verweilzeit im Belebungsbecken über eine Überlaufleitung in einen zentralen Sinkkanal des Nachklärbeckens eingeleitet wird, dadurch gekennzeichnet, daß in einem ersten Teil des Belebungsbeckens (3) die Belüftung des umgewälzten Abwassers und die Durchmischung mit dem belüfteren Rücklaufschlamm sowie am Übergang vom ersten in den zweiten Teil des Belebungsbeckens (3) eine nochmahlige Belüftung erfolgt und daß im zweiten Teil des Belebungsbeckens (3) die Entgasung durchgeführt wird.

2) Verfahren nach Anspruch 1, dadurch gekennzeichnet, daß der Schlamm und das Abwasser in getrennten Kanälen belüftet sowie in einem gemeinsamen Steigkanal durchmischt werden.

3) Vorrichtung zur Durchführung des Verfahrens nach Anspruch 1 oder 2, bei der in einem zylindrischen Becken (1) konzentrisch ein kegel- oder kegelstumpfförmiger Einsatz (2, 2') trichterförmig vorgesehen ist, dessen Spitze oder Grundfläche am oder über dem Boden des Beckens (1) angeordnet ist und dessen Mantel im Becken (1) ein ringförmiges Belebungsbecken (3) freiläßt, und bei der im Einsatz (2, 2') ein Grundschlammräumer (4) und/oder eine zentrale Schlammgrube (5) vorgesehen ist, in welche ein Ansaugrohr (6, 6') einer Schlammpumpe (7), reicht, in deren Bereich insbesondere Druckleitung (8), eine Trenneinrichtung (9), wie z.B. Fliehkraftabscheider, angeschlossen ist, welche einen Überlauf (10) und einen Unterlauf (11) aufweist, dadurch gekennzeichnet, daß im Unterlauf (11) ein Regelventil (12) vorgesehen ist, und der Unter- oder Überlauf über einen Belüfter (13) in einen Mischbehälter (19) des zweiteiligen Belebungsbeckens (3, 16) mündet.

4) Vorrichtung nach Anspruch 3, dadurch gekennzeichnet, daß das zweiteilige Belebungsbecken (3) einen als erstes Belebungsbecken ausgebildeten Ringraum (16) aufweist, in welchen Leitungen für den belüfteten Zulauf, die belüftete Umlaufmenge und des belüfteten Schlammes einmünden sowie Heber (20) mit Belüftungseinrichtungen ausgehen, die in das zweite Belebungsbecken münden.

5) Vorrichtung nach Anspruch 3, dadurch gekennzeichnet, daß für den belüfteten Rücklaufschlamm und das belüftete Abwasser getrennte Fallkanäle und ein gemeinsamer Steigkanal, der als Mischbecken (19) ausgebildet ist, vorgesehen sind (Fig. 1).

## Claims

1) Method for the biological and, if necessary, chemical purification of waste water by means of aeration comprising an activated sludge tank concentrically surrounding the secondary sedimentation tank according to which the sludge of the secondary sedimentation tank is collected and transported, preferably by means of a pump, to an aerating and separating device which separates recirculated sludge and excess sludge which is to be diverted and according to which the waste water from the activated sludge tank is circulated and mixed with the aerated sludge of the secondary sedimentation tank whereby the waster water/sludge mixture via a pipeline is fed into a central downcomer of the secondary sedimentation tank after a retention time in the activated sludge tank and characterized in that the first part of the activated sludge tank (3) is responsible for the aeration of the circulating waste water and the mixing with the aerated recirculated sludge whereby a second aeration takes place when the waste water passes from the first into the second part of the activated sludge tank (3) which is responsible for the degasification.

2) Method according to claim 1, characterized in that the sludge and the waste water are aerated separately and mixed in a common riser.

3) Apparatus for application of the method according to claim 1 or 2 in which a cylindrical tank (1) comprises a conically-shaped or truncated conically-shaped insert (2, 2') concentrically arranged therein in the form of a funnel the tip or the smaller base surface of which is disposed at or above the bottom of the tank, whereby the envelope of the insert in the tank (1) creates an annular activated sludge tank (3) and in which the insert (2, 2') is provided with a sediment scraper (4) and/or a centrally-disposed sludge pit (5) from which the deposited sludge is discharged through a suction pipe (6, 6') by means of a sludge pump (7), with which particularly a pressure pipe (8) and a separating device (9), such as for example a cyclone, are connected in which the precipitated sludge mass is divided into two partial flows, an overflow (10) and an underflow (11) characterized in that the underflow (11) is equipped with a regulating valve (12) and the overflow or the underflow are conveyed to an aerator (13) and then introduced into a mixing tank (19) of the two-part activated sludge tank (3, 16).

4) Apparatus according to claim 3, characterized in that the two-part activated sludge tank (3) is surrounded by an annular space (16) which functions as first activated sludge tank equipped with pipes for the aerated fresh water, the aerated circulating liquid and the aerated sludge and a syphon (20) with aerating devices leading to the second activated sludge tank.

5) Apparatus according to claim 3, characterized in that separate downcomers and a common rising conduit designed as mixing tank (19) are provided for the aerated recirculated sludge and the aerated waste water (Fig. 1).

**Revendications**

1.- Procédé d'épuration biologique et éventuellement chimique d'eaux usées sous adduction d'air avec un bassin d'activation disposé concentriquement au bassin de décantation finale, selon lequel les boues provenant du bassin de décantation finale sont rassemblées au centre et conduites, au moyen d'une pompe, à un dispositif d'aération et de séparation où les boues sont divisées en boues de retour et en boues excédentaires à évacuer, et selon lequel des eaux usées sont recyclées à partir du bassin d'activation et mélangées aux boues aérées provenant du bassin de décantation finale tandis que le mélange de boues et d'eaux usées est conduit, après un temps de séjour dans le bassin d'activation, à un canal central de descente du bassin de décantation finale par une conduite de trop-plein, caractérisé en ce que l'aérage des eaux de recyclage et son mélange avec les boues de recyclage aérées s'effectuent dans une première partie du bassin d'activation (3) tandis qu'un autre aérage a lieu au passage de la première à la deuxième partie du bassin d'activation (3) et que l'extraction des gaz se fait dans la deuxième partie du bassin d'activation (3).

2.- Procédé selon la revendication 1, caractérisé en ce que les boues et les eaux usées sont aérées dans des canaux séparés, et mélangés dans un canal montant commun.

3.- Dispositif pour la mise en oeuvre du procédé selon la revendication 1 ou 2, dans lequel un élément d'insertion (2, 2') de forme conique ou tronconique est disposé concentriquement dans un bassin cylindrique (1) à la manière d'un entonnoir dont la pointe ou la surface de fond est disposée au fond ou au-dessus du fond du bassin (1) et dont l'enveloppe ménage dans le bassin (1) un bassin d'activation (3) annulaire, et dans lequel un débourbeur de fond (4) et/ou un fossé central à boues (5) est prévu dans l'élément d'insertion (2, 2'), dans laquelle fosse arrive une tubulure d'aspiration (6, 6') d'une pompe à boues (7), dans la zone de laquelle est raccordé notamment la conduite de pression (8), un dispositif séparateur (9), tel que par exemple un séparateur centrifuge lequel comporte un passage supérieur (10) et un passage inférieur (11), caractérisé en ce qu'une soupape de réglage (12) est prévue dans le passage inférieur (11) et que le passage inférieur ou le passage supérieur, par l'intermédiare d'un aérateur (13) débouche dans un réservoir de mélange (19) du bassin d'activation (3, 16) en deux parties.

4.- Dispositif selon la revendication 3, caractérisé en ce que le bassin d'activation (3) en deux parties comporte un compartiment annulaire (16) conformé en premier bassin d'activation dans lequel débouchent les conduites pour l'arrivée aérée, la quantité en circulation aérée et les boues aérées qu'en partent des béliers-syphons (20), pourvus de dispositifs d'aérage, qui débouchent dans le deuxième bassin d'activation.

5.- Dispositif selon la revendication 3, caractérisé en ce que des canaux de descente séparés et un canal montant commun qui constitue un bassin de mélange (19) sont prévus pour les boues de recyclage aérées et les eaux usées aérées (figure 1).

Fig.1

Fig. 2

Fig. 3

27

15    31

23    14"

22    24

26    30

34    2'    3    1

29    29

6'    12

7    19

Fig. 4

19    19

27  28  1    2'    14"    1

7

29  29  32

22

34  22  15  6    24

33    22  29    27  19

25    29  22  29    28

19  27  28

3